# EUROPÄISCHE PATENTSCHRIFT

(11) **EP 0 538 495 B1**
(45) Veröffentlichungstag und Bekanntmachung des Hinweises auf die Patenterteilung: **27.07.1994**
(21) Anmeldenummer: 91112911.2
(22) Anmeldetag: 31.07.1991
(51) Int. Cl.: E05F 15/16, H02K 23/66

(54) **Motorischer Fensterheberantrieb für ein Kraftfahrzeug**
Motor window raising drive for a vehicle
Commande pour lève-glace de véhicule à moteur

(43) Veröffentlichungstag der Anmeldung: 28.04.1993
(73) Patentinhaber: SIEMENS AKTIENGESELLSCHAFT, 80333 München (DE)
(72) Erfinder: Michel, Peter, Dipl.-Ing., W-8702 Kleinrinderfeld (DE)

(56) Entgegenhaltungen:
- DE-A- 3 021 948
- DE-A- 3 838 285
- DE-U- 7 115 761
- DE-U- 9 013 006

## Beschreibung

Die Erfindung bezieht sich auf einen motorischen Antrieb gemäß Oberbegriff des Anspruchs 1; ein derartiger Antrieb ist durch die DE-A-3 021 948 bekannt.

Im bekannten Fall der DE-A-3 021 948 werden zur sicheren Kontaktgabe und festen Halterung Stecker eines im Getriebegehäuse befestigten Steckerteils in Schlitze einer Leiterplatte gesteckt und dann das Elektronikgehäuse über die Leiterplatte und dann axial und somit parallel zum Motorgehäuse aufgesteckt.

In einem durch die DE-U-90 13 006 bekannten Fall ist das Elektronikgehäuse einstückiger Bestandteil des Getriebegehäuses, an das das Motorgehäuse ange-schraubt ist. Eine in das Elektronikgehäuse eingelegte ein eindimensinonale Leiterplatte ragt mit einem einstückigen Bürsten-Aufnahmeteil in den motorseitigen Getriebegehäuseteil, der sich axial bis über die Bürstenhalterung und den Kommutatorteil des antreibenden Kommutatormotors erstreckt.

Durch die DE-A1-38 38 285 ist ein insbesondere zum Antrieb von Scheibenwischeranlagen in Kraftfahrzeugen vorgesehener Elektromotor mit an dessen Motorgehäuse angeschraubtem Getriebe und einem separaten, im wesentlichen parallel zum Motorgehäuse verlaufenden Elektronik-Gehäuse bekannt, das bei der Montage nach zur Motorachse radialen und/oder tangentialem Zuführen an einer sich radial teilweise über das Motorgehäuse erstrekkenden Zunge eines Getriebegehäusedeckels u.a. durch Verrastung fixierbar ist; gleichzeitig werden aus dem Elektronikgehäuse herausgeführte elektrische Verbindungskontakte mit senkrecht zum Getriebegehäusedeckel hochstehenden Gegenkontakten verbunden, die ihrerseits mittels außen über das Getriebegehäuse herumgeführter und durch eine Tülle in das Motorgehäuse hineingeführter Kabel mit den Bürsten des Elektromotors verbunden sind. Zur mechanischen Sicherung des Elektronikgehäuses weist dieses eines an seinem getriebegehäuseseitigen Ende radial abstehendes festes Auge auf, das auf einem zentralen Durchzug des Bodens des topfförmigen Motorgehäuses abgestützt ist.

Durch die DE-A1-30 21 948 ist ein Kraftfahrzeug-Scheibenwischerantrieb mit einem parallel zum Motorgehäuse angeordneten, leicht auswechselbaren Elektronikgehäuse bekannt, das mit einem Steckhülsengehäuse in zur Motorachse senkrechter Richtung in ein korrespondierendes Steckergehäuse am Getriebegehäuse des Scheibenwischerantriebs eingesteckt wird und das sich in seiner Betriebsendlage über eine fest angeformte Rippe außen am Motorgehäuse abstützt.

Gemäß Aufgabe vorliegender Erfindung soll bei einem Antrieb mit einem Elektronikgehäuse der Bauteile- und Montageaufwand, insbesondere unter Berücksichtigung einer Fertigung mit Handhabungsautomaten und einer gewissen Fertigungsbandbreite mit unterschiedlichen motorischen Leistungsdaten, verringert werden. Die Lösung dieser Aufgabe gelingt bei einem motorischen Antrieb der eingangs genannten Art durch die Lehre des Anspruchs 1; vorteilhafte Ausgestaltungen der Erfindung sind jeweils Gegenstand der Unteransprüche.

Die erfindungsgemäße Konstruktion erlaubt bei einer insbesondere für eine Automatenfertigung vorteilhaften sogenannten Aufbaumontage mit jeweils in Motorachsrichtung zugeführten Bauteilen einen aufwandsarmen stabilen Anbau des gesamten Elektronikgehäuses und geführten einschließlich seiner Elektronik- sowie Anschlußteile an die Motorgetriebeeinheit und gleichzeitig deren elektrischen Anschluß an die Bürstenhalterung des Elektromotors, wobei bei unterschiedlicher Motor- und/oder Getriebegehäusegröße trotzdem ein Einheits-Elektronikgehäuse universell verwendbar ist; dadurch daß nach einer Ausgestaltung der Erfindung sämtliche Führungs-und Kontaktierungsmittel des Elektronikgehäuses Teile eines GEhäusedeckels sind, mit dem das zum Getriebegehäuse hin offene Elektronikgehäuse verschließbar ist, kann bei gegebenenfalls auch notwendiger Baugrößenänderung des Elektronikgehäuses auf eine Anpassungsänderung der Führungs- und Kontaktierungsmittel verzichtet werden, wenn sich die Baugrößenänderung des Elektronikgehäuses lediglich, insbesondere in Anpassung an ein entsprechend verlängertes Motorgehäuse, auf eine axiale Baulängenvergrößerung beschränkt.

Die Erfindung sowie vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen:
- FIG 1: in einer axialen Explosionsdarstellung das Elektronikgehäuse und dessen Abstützung am Motorgehäuse vor der Montage bzw. Kontaktierung mit der Getriebe-Motorgehäuseeinheit;
- FIG 2: eine stirnseitige Draufsicht auf den getriebegehäuseseitigen Gehäusedeckel des Elektronikgehäuses.

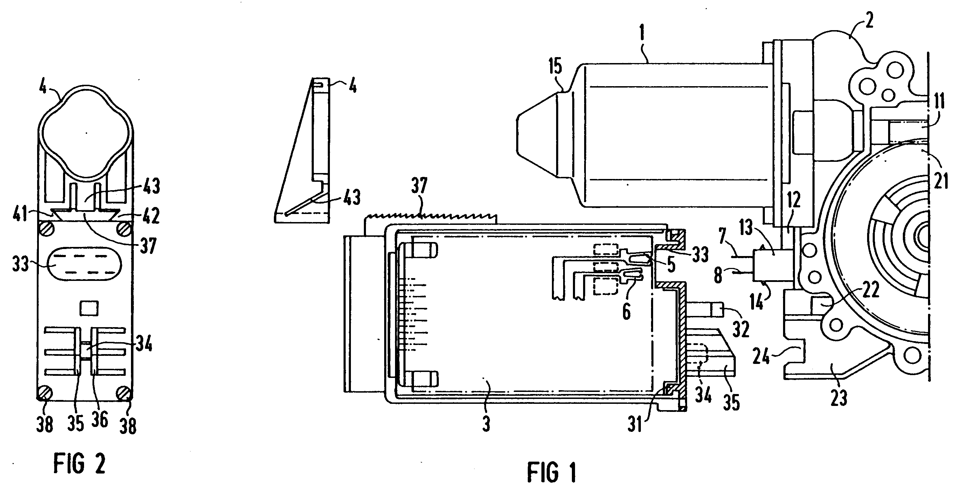

FIG 1 zeigt einen Kraftfahrzeug-Fensterheberantrieb mit einem topfförmigen Motorgehäuse 1 eines Kommutatormotors und einem an dessen offener Stirnseite angeflanschtem Getriebegehäuse 2, in das die verlängerte Rotorwelle 11 des Kommutatormotors mit einer Schneckenwelle ragt, die mit einem Getrieberad 21 kämmt, das in hier nicht näher dargestellter Weise mit einer Seilscheibe zum Antrieb eines Fensters in einer Kraftfahrzeugtür gekoppelt ist. Parallel zur Motorachse bzw. zur Topfwand des Motorgehäuses 1 ist ein eine Motorsteuer- und/oder Überwachungselektronik aufnehmendes Elektronikgehäuse 3 als separates Bauteil in axialer Richtung geführt am Getriebegehäuse 2 fixierbar und mit elektrischen Zuleitungen zur Bürstenhalterung des Kommutatormotors kontaktierbar.

Im einzelnen sind dazu am Getriebegehäuse 2 zur Führung und Sicherung in Richtung der Achse des Getrieberades 21 am Getriebegehäuse 2 eine axiale Führungszunge 23 vorgesehen, die beim Aufstecken des Elektronikgehäuses 3 von zwei daran befestigten axial vorstehenden Führungslippen 35 bzw.36 mit Gleitführung seitlich umgriffen wird und in die Führungszunge 23 in baulich besonders kompakter Weise zur formschlüssigen Gleitführung senkrecht zur Achse des Getrieberades 21 eine Führungsnut 24 eingelassen, in die ein zwischen den Führungslippen 35 bzw.36 des Elektronikgehäuses 3 angeformter axial vorstehender Führungssteg 34 eingreift. Zur gegenseitigen Lagefixierung in der Montageendlage ist an das Elektronikgehäuse 3 ein axial vorstehender Rasthaken 32 angeformt, der in eine korrespondierende Rasthinterscheidung 22 im Unterteil des Getriebegehäuses 2 eingreift.

Zur elektrischen Kontaktierung zwischen den Bürsten des Kommutatormotors im Motorgehäuse 1 und der Motorelektronik im Elektronikgehäuse 3 ist in vorteilhafter Weise eine die Bürsten aufnehmende, zwischen der offenen Stirnseite des Motorgehäuses 1 und der gegenüberliegenden Flanschseite des Getriebegehäuses 2 fixierte Bürstentragplatte 12 über den Außenrand des getriebegehäuseseitigen Flansches bzw. des Motorgehäuses hinaus bis in den Stirnbereich des Elektronikgehäuses 3 verlängert und in einen axial gegen das Elektronikgehäuse 3 gerichteten Stecker 13 mündend ausgebildet, in den isolierend und dichtend Kontaktstifte 7;8 eingelassen sind. Beim Aufstecken des Elektronikgehäuses 3 auf das Getriebegehäuse 2 greift der Stecker 13 in ein Steckergehäuse 33 des Elektronikgehäuses 3 ein, an dessen Grund zu den Kontaktstiften 7;8 korrespondierende Kontaktösen 5;6 eingelassen sind. Zur zusätzlichen Abdichtung zwischen dem Stecker 13 und dem Steckergehäuse 33 dient eine an den Stecker 13 angespritzte umlaufende Dichtlippe 14. In hier nicht näher dargestellter Weise dient eine Steckereinheit am dem Getriebegehäuse abgewandten Ende des Elektronikgehäuses dem Anschluß einer äußeren Speiseleitung.

In vorteilhafter Weise ist ein axiales Versetzen der Kontaktstifte 7;8 bzw. Kontaktösen 5;6 im Sinne einer zeitlich unterschiedlichen Erstkontaktierung der Kontaktstifte mit ihren Kontaktösen beim Zusammenstecken von Getriebegehäuse einerseits und Elektronikgehäuse andererseits derart vorgesehen, daß eine nur wesentlich kleinere Aufschiebekraft zur Gesamtkontaktierung der Elektronikeinheit im Vergleich zu einer Parallelanordnung der Kontaktösen und Kontaktstifte erforderlich ist.

Nach einer Ausgestaltung der Erfindung sind die Führungslippen 35;36, der Führungssteg 34, der Rasthaken 32 und das Steckergehäuse 33 Teile eines, z.B. mittels Deckelschrauben 38 an dem Elektronikgehäuse 3 festschraubbaren Gehäusedeckels 31, so daß bei einem notwendigen Reparaturfall durch Beschädigung eines der Führungs- bzw. Kontaktierungsmittel nur der Gehäusedeckel 31 ausgetauscht werden braucht bzw. bei unterschiedlicher Motorelektronik und dementsprechend unterschiedlicher axialer Baulänge des Elektronikgehäuses 3 eine bauliche Änderung der Führungs- und Fixierungs- sowie Kontaktierungsmittel nicht notwendig ist.

Zur zusätzlichen mechanischen Fixierung des Elektronikgehäuses 3, insbesondere bei größerer axialer Baulänge, relativ zum parallel verlaufenden Motorgehäuse 1 ist nach einer weiteren Ausgestaltung der Erfindung ein Abstützelement 4 vorgesehen, das einerseits am Elektronikgehäuse 3 in unterschiedlicher axialer Tiefe fixierbar bzw. festlegbar ist und mit einem geschlossenen oder geöffneten Auge auf die Außenwandung des Motorgehäuses 1 bzw. einen Auflagerand eines Lagerdurchzuges an der dem Getriebegehäuse 2 abgewandten Stirnseite aufsteckbar bzw. aufschnappbar ist. Zur axialen Verstellbarkeit in Anpassung an verschiedene axiale Baulängen insbesondere des Motorgehäuses 1, ist an der dem Motorgehäuse 1 zugewandten Außenseite des Elektronikgehäuses 3 ein Raststeg bzw. Führungssteg 37 vorgesehen, der - wie insbesondere aus FIG 2 ersichtlich - axiale Führungsschienen für hintergreifbare Führungsnasen 41;42 bzw. eine Rastzahnung für eine elastisch eindrückende Rastzuge 43 aufweist.

## Patentansprüche

1. Motorischer Antrieb, enthaltend ein Motorgehäuse (1), ein Getriebegehäuse (2) sowie ein im wesentlichen parallel zu dem Motorgehäuse(25) angeordnetes, in Achsrichtung der Längsachse des Motorgehäuses montiertes und mit einer Bürstenhalterung direkt kontaktierbares, eine Motorelektronik aufnehmendes seperates Elektronikgehäuse (3) mit elektrischen Kontaktierungsmitteln zu der Bürstenhalterung in dem Motorgehäuse (1), die z.B. eine Bürstenplatte (12) ist, **dadurch gekennzeichnet**, daß es sich um einen motorischen Kraftfahrzeug-Fensterantrieb handelt und daß das seperate Elektronikgehäuse (3) mittels gehäusefest angeformter axialer Führungsmittel in Form von zumindest einer Führungszunge (23) bzw. von an dieser anliegenden Führungslippen (35,36) an dem Getriebegehäuse (2) bzw. dem Elektronikgehäuse (3) mit dem Getriebegehäuse(2) bei gleichzeitiger Kontaktierung der Kontaktierungsmittel, die z.B. Kontaktstifte (7,8) bzw. Kontaktösen (5,6) sind, zusammengebaut ist.

2. Motorischer Antrieb nach Anspruch 1, **gekennzeichnet** **durch** ein axiales Aufsteckenübergreifen mit tangentialer Gleitanlage zumindest einer an das Getriebehäuse (2) oder das Elektronikgehäuse (3) angeformten Führungszunge (23) durch jeweils zwei korrespondierende, an das Elektronikgehäuse (3) oder das Getriebegehäuse (2) stirnseitig angeformte Führungslippen (35,36).

3. Motorischer Antrieb nach Anspruch 1 oder 2, **gekennzeichnet** **durch** ein axiales Einstecken mit radialer Gleitanlage zumindest eines an das Elektronikgehäuse (3) bzw. das Getriebehäuse (2) angeformten Führungssteges (34) in eine an das Getriebegehäuse (2) bzw. das Elektronikgehäuse angeformte korrespondierende axial offene Führungsnut (24).

4. Motorische Antrieb nach Anspruch 1 oder 2, **gekennzeichnet** **durch** eine in die Führungs zunge (23) am Getriebegehäuse (2) eingeformte Führungsnut (24) und einen zwischen die Führungslippen (35,36) am Elektronikgehäuse (3) angeformten Führungssteg (34).

5. Motorischer Antrieb nach einem der Ansprüche 1-4, **gekennzeichnet** **durch** einen an das Elektronikgehäuse (3) bzw. das Getriebegehäuse (2) angeformten axialen Rasthaken (32) und eine korrespondierende, in der gegenseitigen axialen Montageendlage von Elektronikgehäuse (3) und Getriebegehäuse (2) den Rasthaken (32) aufnehmende, am Getriebegehäuse (2) bzw. am Elektronikgehäuse (3) angeformte Rasthinderschneidung (22).

6. Motorischer Antrieb mit einem eine Bürstenplatte (12) enthaltenden Kommutatormotor nach einem der Ansprüche 1-5, **gekennzeichnet** **durch** einen an die radial über das Motorgehäuse (1) bis vor das Elektronikgehäuse (3) verlängerte Bürstenplatte (12) angeformten axialen Stecker (13)mit axialen Kontaktmitteln und ein korrespondierendes, axial geöffnetes Steckergehäuse (33) mit den Kontaktmitteln zugeordneten axialen Gegenkontaktmitteln.

7. Motorischen Antrieb nach Anspruch 6, **dadurch** **gekennzeichnet**, daß als axiale Kontaktmittel Kontaktstifte (7,8) und als Gegenkontaktmittel Kontaktösen (5,6) vorgesehen sind.

8. Motorischer Antrieb nach Anspruch 7, **gekennzeichnet** **durch** ein axiales Versetzen der Kontaktstifte (7,8) bzw. Kontaktösen (5,6) im Sinne einer zeitlich unterschiedlichen Erstkontaktierung der Kontaktstifte mit ihren Kontaktösen beim Zusammenstecken von Getriebegehäuse (2) einerseits und Elektronikgehäuse (3) andererseits.

9. Motorischer Antrieb nach einem der Ansprüche 1-8, **dadurch gekennzeichnet**, daß die elektronikgehäuseseitigen Führungsmittel und/oder Kontaktmittel Teile eines Gehäusedeckels (31) sind, mit dem das zum Getriebegehäuse (2) hin offene Elektronikgehäuse (3) verschließbar, z.B. mittels Deckelschrauben 38 ist.

10. Motorischer Antrieb nach einem der Absprüche 1-9, **gekennzeichnet** **durch** ein das Motorgehäuse (1) zumindest teilweise umfassendes, am Elektronikgehäuse (3) fixierbares Abstützelement (4).

11. Motorischer Antrieb nach Anspruch 10, **gekennzeichnet** **durch** ein an dem Elektronikgehäuse (3) geführtes, axial verschiebbares sowie in einer jeweiligen Betriebs-Abstützendlage verrastbares Abstützelement (4).

## Claims

1. Motor-operated drive, comprising a motor housing (1), a gear housing (2) and a separate electronics housing (3) arranged substantially parallel to the motor housing (25), mounted in the axial direction of the longitudinal axis of the motor housing, capable of being contacted directly with a brush holder and incorporating engine electronics, with electrical contacting means for the brush holder in the motor housing (1), which brush holder is, for example, a brush plate (12), characterized in that it is a motor-operated motor-vehicle window drive and in that the separate electronics housing (3) is assembled by means of axial guide means integrally moulded in a housing-fixed manner in the form of at least one guide tongue (23) or guide lips (35, 36), abutting the tongue, on the gear housing (2) or the electronics housing (3) with the gear housing (2) with simultaneous contacting of the contacting means, which are, for example, contact pins (7, 8) or contact rings (5, 6).

2. Motor-operated drive according to claim 1, characterized by an axial attachment-overlapping with tangential sliding abutment of at least one guide tongue (23) integrally moulded to the gear housing (2) or the electronics housing (3) by means of in each case two corresponding guide lips (35, 36) integrally moulded on the front of the electronics housing (3) or the gear housing (2).

3. Motor-operated drive according to claim 1 or 2, characterized by an axial insertion with radial sliding abutment of at least one guide bar (34) integrally moulded to the electronics housing (3) or the gear housing (2) into a corresponding axially open guide groove (24) integrally moulded to the gear housing (2) or the electronics housing.

4. Motor-operated drive according to claim 1 or 2, characterized by a guide groove (24) moulded into the guide tongue (23) on the gear housing (2) and a guide bar (34) integrally moulded between the guide lips (35, 36) to the electronics housing (3).

5. Motor-operated drive according to one of claims 1-4, characterized by an axial catch hook (32) integrally moulded to the electronics housing (3) or the gear housing (2) and a corresponding catch undercut (22) incorporating the catch hook (32) in the opposite axial assembly end position of the electronics housing (3) and the gear housing (2) and integrally moulded to the gear housing (2) or the electronics housing (3).

6. Motor-operated drive having a commutator motor containing a brush plate (12) according to one of claims 1-5, characterized by an axial plug (13), integrally moulded to the brush plate (12) extended radially over the motor housing (1) up to and in front of the electronics housing (3), with axial contact means, and by a corresponding axially open plug housing (33) with axial counter contact means associated with the contact means.

7. Motor-operated drive according to claim 6, characterized in that contact pins (7, 8) are provided as axial contact means and contact rings (5, 6) are provided as counter contact means.

8. Motor-operated drive according to claim 7, characterized by an axial staggering of the contact pins (7, 8) or contact rings (5, 6) in the sense of a temporally different first contacting of the contact pins with their contact rings upon the assembling of the gear housing (2) on one side and the electronics housing (3) on the other side.

9. Motor-operated drive according to one of claims 1-8, characterized in that the guide means and/or the contact means on the side of the electronics housing are parts of a housing cover (31) with which the electronics housing (3) open towards the gear housing (2) can be closed, for example by means of cover screws (38).

10. Motor-operated drive according to one of claims 1-9, characterized by a supporting element (4) enclosing the motor housing (1) at least partially and capable of being fixed to the electronics housing (3).

11. Motor-operated drive according to claim 10, characterized by a supporting element (4) guided on the electronics housing (3), axially displaceable and capable of being locked in a respective operating supporting end position.

## Revendications

1. Dispositif d'entraînement à moteur, comportant une carcasse (1) de moteur, un carter (2) de transmission, ainsi qu'une enveloppe (3) de réception de dispositif électronique pour moteur, distincte, disposée sensiblement parallèlement à la carcasse (25) de moteur, montée dans la direction de l'axe longitudinal de la carcasse de moteur, susceptible d'être mise en contact directement au moyen d'un support de balai et comportant des moyens électriques de contact avec le support de balais de la carcasse (1) de moteur, qui est par exemple une plaque (12) de balais, caractérisé en ce qu'il s'agit d'un dispositif d'entraînement à moteur pour lève-glace de véhicule automobile, en ce que l'enveloppe (3) de dispositif électronique distincte est montée sur le carter (2) de transmission, avec mise en contact simultanée des moyens de contact, qui par exemple sont des tiges de contact (7, 8) ou respectivement des oeillets de contact (5, 6), à l'aide de moyens de guidage axiaux issus de l'enveloppe, se présentant sous la forme d'au moins une languette de guidage (23) ou respectivement de lèvres de guidage (35, 36) s'y appliquent situées sur le carter (2) de transmission ou sur l'enveloppe (3) de dispositif électronique.

2. Dispositif d'entraînement à moteur selon la revendication 1, caractérisé par un recouvrement axial à l'enfilage, avec un appui glissant tangentiel d'au moins une languette de guidage (23) issue du carter (2) de transmission ou de l'enveloppe (3) de dispositif électronique, au moyen de deux lèvres de guidage (35, 36) correspondantes, issues du côté frontal de l'enveloppe (3) de dispositif électronique, ou du carter (2) de transmission.

3. Dispositif d'entraînement à moteur selon la revendication 1 ou 2, caractérisé par un enfilage axial avec appui glissant radial d'au moins une barrette (34) de guidage issue de l'enveloppe (3) de dispositif électronique ou du carter (2) de transmission dans une gorge (24) de guidage correspondante, ouverte axialement, issue du carter (2) de transmission ou de l'enveloppe de dispositif électronique.

4. Dispositif d'entraînement à moteur selon la revendication 1 ou 2, caractérisé par une gorge (24) de guidage ménagée dans la languette de guidage (23) située sur le carter (2) de transmission et par une barrette de guidage (34) issue de l'enveloppe (3) de dispositif électronique entre les lèvres de guidage (35, 36).

5. Dispositif d'entraînement à moteur selon l'une des revendications 1 à 4, caractérisé par un crochet (3) d'encliquetage axial issu de l'enveloppe (3) de dispositif électronique ou du carter de transmission (2) et par une contre-dépouille (22) d'encliquetage correspondante, issue du carter (2) de transmission ou de l'enveloppe (3) de dispositif électronique, recevant le crochet (32) d'encliquetage lorsque l'enveloppe (3) de dispositif électronique et le carter (2) de transmission sont dans la position axiale relative finale de montage.

6. Dispositif d'entraînement à moteur comportant un moteur à collecteur, ayant une plaque (12) formant balai, selon l'une des revendications 1 à 5, caractérisé par une fiche axiale (13) issue de la plaque (12) formant balai se prolongeant axialement au-delà de la carcasse (1) de moteur jusque devant l'enveloppe de dispositif électronique, comportant des moyens de contact axiaux et une enveloppe (33) de fiche correspondante ouverte et ayant des moyens de contact antagonistes axiaux affectés aux moyens de contact.

7. Dispositif d'entraînement à moteur selon la revendication 6, caractérisé en ce que des tiges (7, 8) de contact sont prévues en tant que moyens de contact axiaux, et en ce que des oeillets de contact (5, 6) sont prévus en tant que moyens de contact antagonistes.

8. Dispositif d'entraînement à moteur selon la revendication 7, caractérisé par un décalage axial des tiges (7, 8) de contact ou des oeillets de contact (5, 6) dans le but de permettre une première mise en contact décalée dans le temps des tiges de contact avec leur oeillets de contact lors de l'assemblage du carter (2) de transmission d'une part et de l'enveloppe (3) de dispositif électronique d'autre part.

9. Dispositif d'entraînement à moteur selon l'une des revendications 1 à 8, caractérisé en ce que les moyens de guidage situés du côté de l'enveloppe de dispositif électronique et/ou les moyens de contact font partie d'un couvercle (31) d'enveloppe au moyen duquel l'enveloppe (3) de dispositif électronique ouverte en direction du carter (2) de transmission, peut être fermée par exemple au moyen de vis (38) de couvercle.

10. Dispositif d'entraînement à moteur selon l'une des revendications 1 à 9, caractérisé par un élément d'appui (4) qui entoure au moins partiellement la carcasse (1) de moteur et qui est susceptible d'être fixé sur l'enveloppe (3) de dispositif électronique.

11. Dispositif d'entraînement à moteur selon la revendication 10, caractérisé par un élément d'appui (4) passant sur l'enveloppe (3) de dispositif électronique et susceptible de coulisser axialement ainsi que d'être encliqueté dans une position finale d'appui en fonctionnement.
